# EUROPEAN PATENT APPLICATION

(11) **EP 1 346 646 A1**
(43) Date of publication of application: **24.09.2003**
(21) Application number: 03251675.9
(22) Date of filing: 18.03.2003
(51) Int. Cl.: A23G 1/20, A47J 43/20

(54) **Isostatic pressing of wax like products**

(30) Priority: 18.03.2002 US 365449 P; 07.11.2002 GB 0225998; 07.11.2002 US
(71) Applicant: WHAM-O, INC., Emeryville, CA 94608 (US)
(72) Inventor: Palmer, Stephen L., California 95682 (US); Palmer, William R., California 95872 (US); Palmer, Norris L., California 95864 (US)
(74) Representative: Wilson Gunn M'Caw

(57) **Abstract**

Molded chocolate shapes are made by charging solid chocolate (58) from a hopper (36) into an injection chamber (60) from where it is expelled by a piston (42) into a shaped mold (14). The chocolate (58) is expelled at ambient temperature by application of pressure isotactically with the piston (42) which causes the chocolate to flow and then solidify in the mold. The pressure is applied manually via a lever mechanism (19) which is connected to the plunger (32) so that the plunger (32) is moved down to feed chocolate into the injection chamber as the piston (42) is retracted.

## Description

### Field of the Invention

The present invention relates generally to isostatic pressing of wax-like products. More specifically, the invention concerns a children's toy for pressing wax like substances into a variety of molded shapes without the use of high temperatures.

### Background of the Invention

A great deal of pleasure may be derived from employing the arts and crafts required to produce finished objects. Craft and hobby kits comprise an important segment of the toy business. Toys such as toy baking ovens, vacuum forming machines and plastisol curing sets have permitted millions of children to experience the joy of making their own foods and toy items. Indeed, since these types of toys employ many of the same manufacturing methods as used in the commercial sector, a child who has used these toys has also learned something about production of items in the real world.

While food-making toys such as cake and cookie baking sets have proven to be immensely popular toys, it must be noted, many of these toys employ high temperature processes to bake food items. Additionally, these baking sets usually require electric power from household circuits, typically 110 volts A.C. Such voltages are dangerous and can be lethal. Further, the requirement for connection to household electric circuits limits the toy's portability in that it must necessarily be operated in close proximity to the source of electrical power.

Some candy making kits rely on the use of batteries to provide power to heat and melt chocolate for example, but these toys consume batteries very rapidly. Additionally, there is still the safety problem associated with the high temperatures necessary to melt a candy product.

Home candy making and decoration kits are another form of popular craft toys, except for frosting and fondant-based candies, which may be applied to substrates and then permitted to dry and harden. These home candy making and decoration types of kits are limited primarily to the decoration of existing food items through the application of decorative edible agents, such as "red hots" (small cinnamon flavored drops) or other colored gels and the like.

For a variety of reasons, chocolate has become the candy of choice for many and has been referred to as "the king of candy". While many types of chocolate exist, a favorite is that form of chocolate, commonly known as milk chocolate, which is creamy and melts in one's mouth. Forming this chocolate into various shapes and forms adds further to the interest in the candy. For example, chocolate candy may be molded into the shape of animals and characters, such as a rabbit for Easter, or perhaps Santa Claus for Christmas. Forming the chocolate into said shapes adds value to the candy.

One currently used forming process requires heating the chocolate until it melts into a creamy thixotropic liquid state. This liquid is then poured into molds and allowed to cool and harden. A special heat cycling process may be employed to temper the chocolate.

Tempering yields a chocolate which is stable and which produces a "snap" when broken. The tempering process is somewhat complex and can be problematic to achieve. The heating and cooling processes for tempering must be precisely controlled for effective results.

It is unlikely that a child would be able to successfully temper molded chocolate because of the precise heating and cooling processes that must be followed in order to produce a successfully tempered chocolate. Additionally, a chocolate making kit capable of producing this precise heating and cooling processes would be expensive and require considerable power. Another drawback of a kit designed to temper chocolate is that it would produce dangerously high temperatures that might result in injuries to a child using the kit.

Summer or tropical chocolate candy which is similar to regular milk-chocolate requires no tempering, however this form of chocolate lacks the desirable flavor and texture of regular chocolate and in any case has been traditionally processed by melting and casting in molds, a process which also requires significant heat.

If a chocolate candy-making toy set could be devised that did not rely on heat for forming molded chocolate pieces, it would undoubtedly be a useful toy. Further, if the toy did not require electric power from an outlet or batteries it would be even more useful. Additionally, if the chocolate candies produced by such a toy exhibited the desirable qualities of a properly tempered chocolate but did not require the detailed conventional tempering processes, the toy would be truly unique. Still further, if the process and toy of the instant invention were applicable to the production of items from materials other than chocolate, such as for example candles or soaps the toy would be even more useful.

### Summary of the Invention

An isostatic press configured to form wax-like raw materials, such as milk chocolate, into a variety of interchangeable molds. The press includes a raw material hopper and complementary indexer for feeding raw material into an injection chamber. A piston blade configured to press raw material from the injection chamber through an injection channel and into a mold cavity. A handle operatively connected to the piston blade by moving it reciprocally between a retracted position where raw material is fed into the injection chamber and an extended position where raw material is pressed through the injection channel into the mold cavity.

### Brief Description of the Drawings

Fig. 1 is an isometric view of an embodiment of an isostatic press constructed according to the present invention.
Fig. 2 is an isometric exploded view of the isostatic press of Fig. 1.
Fig. 3 is a sectional side view of the isostatic press of Fig 1.
Fig. 4 is a sectional side view of the isostatic press of Fig. 1, showing the press handle in an upward position, fully retracting a piston.
Fig. 5A is a partial sectional side view of the isostatic press of Fig. 1, showing the piston fully retracted and a quantity of chocolate in a hopper for pressing into a mold.
Fig. 5B is a partial sectional side view of the isostatic press of Fig. 5A, showing a partial stroke of the press handle moving the piston to shear a portion of the chocolate from the hopper.
Fig. 5C is a partial sectional side view of the isostatic press of Fig. 5A, showing a full stroke of the press handle moving the piston to press the sheared portion of the chocolate from the hopper into the mold.
Fig. 5D is a partial sectional side view of the isostatic press of Fig. 5A, showing the press handle in an upward position, and the piston fully retracted allowing the chocolate in the hopper to be indexed downward.
Fig. 5E is a partial sectional side view of the isostatic press of Fig. 5A, after multiple strokes of the press handle showing a significant quantity of the chocolate from the hopper moved into the mold by the piston.
Fig. 5F is a partial sectional side view of the isostatic press of Fig. 5A, after sufficient strokes of the press handle to cause the chocolate moved from the hopper to form a substantially solid form in the mold.

### Detailed Description of the Invention

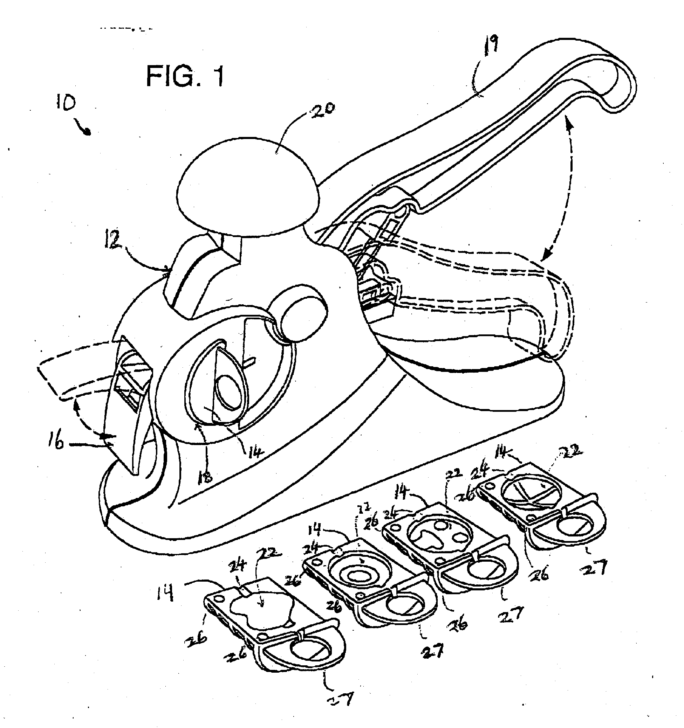

An embodiment of an isostatic press for molding a product from a pressure-fusible material is indicated generally at 10 in Fig. 1. Pressure-fusible materials include most wax-like materials, such as milk chocolate, candle wax, soaps, etc. for illustrative purposes we will use milk chocolate as an example of a pressure-fusible material. Isostatic press 10 includes a press housing 12 configured to receive a mold 14. A mold locking mechanism 16 is configured to lock mold 14 in place within a mold chamber 18. A press handle 19 may move through a stroke to operate isostatic press 10. A plunger knob 20 connects to a plunger (not shown in Fig. 1) near the top of housing 12 to feed chocolate through a hopper in the isostatic press.

A plurality of molds 14 may be used in conjunction with isostatic press 10, as illustrated in Fig. 1. Each of molds 14 include a mold cavity 22 that may take on a variety of shapes that enhance the play value of the products created with isostatic press 10. Mold cavities 22 are formed into a variety of fun shapes including a heart shape, a coin shape, a star shape, a happy face shape, a teddy bear shape, and any other fun desirable shapes. Mold cavities 14 may be in virtually any shape provided that the volume of the mold cavity is sized so that the capacity of the hopper will exceed the amount of material needed to fill and pressurize the mold cavity. Of course the hopper may be repeatedly filled to accommodate large molds.

Molds 14 each include a mold sprue 24 extending between mold cavity 22 and the exterior of mold 14 so that excess material pressed into the mold cavity has a path to escape. Molds 14 further include a mold handle 27 to facilitate easy removal of the mold from mold chamber 18. Additionally, mold sprue 24 adds to the play value of the isostatic press because material squeezing through the mold sprue makes a squishy noise and provides a visible signal that the mold is full and ready to be removed from the press. Operation of press 10 will be explained in more detail below.

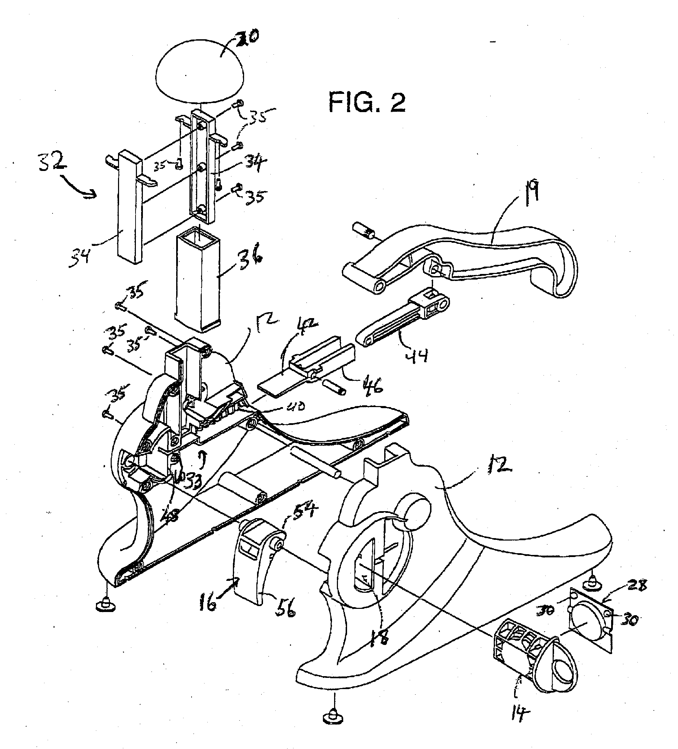

Molds 14 further include a liner detent 26 to align a mold liner 28 (shown in Fig. 2) with mold cavity 22. Mold liner 28 is thin and flexible and permits a user to remove the molded item from the mold cavity after the molding process. Mold liner 28 includes alignment points 30 configured to fit in liner detents 26 of molds 14. The alignment points 30 ensure that mold liner 28 fits properly in mold 14 by fitting into liner detents 26. Mold liners 28 facilitate removal of the product from the mold and because they are flexible the product may also be easily removed from the mold liner enhancing the play value of the press. Each different shape mold may have a corresponding mold liner having a corresponding shape configured to fit within that mold. In an alternate embodiment, flexible mold liners may be used, which do not correspond directly to the shape of the mold. These flexible mold liners assume the shape of the mold as the mold cavity is filled with chocolate. This flexible mold liner would replace the preformed mold liner 28 in the depicted embodiment.

As shown in Fig. 2, isostatic press 10 includes a plunger 32 having plunger knob 20 positioned at an upper end of the plunger. Plunger 32 is configured to feed raw material into the press. Plunger 32 includes a plunger body 34. Plunger body 34 is elongate and sized to fit within a hopper 36. Plunger body 34 may be made from two halves that are secured together with suitable fasteners 35.

Hopper 36 is configured to receive raw material, such as milk-chocolate, for feeding into press 10. Hopper 36, as shown in Fig. 2, includes an elongate rectangular hollow body with an upper opening for receiving chocolate and a lower opening for allowing the chocolate to pass into a press piston region 38. Press piston region 38 may also be referred to as an injection zone. Hopper 36 may be secured within an upper portion of press housing 12.

Press housing 12 may include two halves that are secured together with suitable fasteners 35. Press housing 12 also may include a series of reinforcement ribs 40 positioned adjacent press piston region 38, which is located below hopper 36 and is configured to receive material from the hopper. Reinforcement ribs 40 strengthen the housing where the forces generated by press handle 19 are transferred to a press piston 42.

Press piston 42 is connected to press handle 19 through piston linkage 44 and a piston guide 46. Piston linkage 44 pivotally connects to piston guide 46 and press handle 19. Piston linkage 44 permits up and down motion of press handle 19 to be converted into reciprocal horizontal motion in press piston 42. As shown in Fig. 2, press piston 42 is guided by a piston guide 46 along a horizontal reciprocal path. A piston guide 46 may be integral with a rear portion of press piston 42.

Press piston 42 is sized to enhance the function of isostatic press 10. The cross sectional dimensions of press piston 42 are in the range of about 1/16 to 3/16 inch thick and about 5/8 to 7/8 of an inch wide. More preferably, the dimensions of press piston 42 are about 1/8 inch thick and about ¾ inch wide. It will be understood that a variety of dimensions may be used provided that the cross sectional area is sized to reduce the required force on handle 19 to produce high pressure in the mold.

As noted above, isostatic press 10 includes mold chamber 18 for receiving molds 14. Mold chamber 18 includes a compression chamber wall 48. Molds 14 have an open-faced mold cavity configured to abut compression chamber wall 48. Mold cavity 22 forms a substantially closed compression chamber 50 with chamber wall 48. Compression chamber wall 48 includes a planer face 52 forming a boundary of compression chamber 50. Planer face 52 facilitates removal of mold 14 from isostatic press 10 when the pressing operation is complete because it permits the filled mold to be removed by a perpendicular sliding motion relative to the planer wall 52.

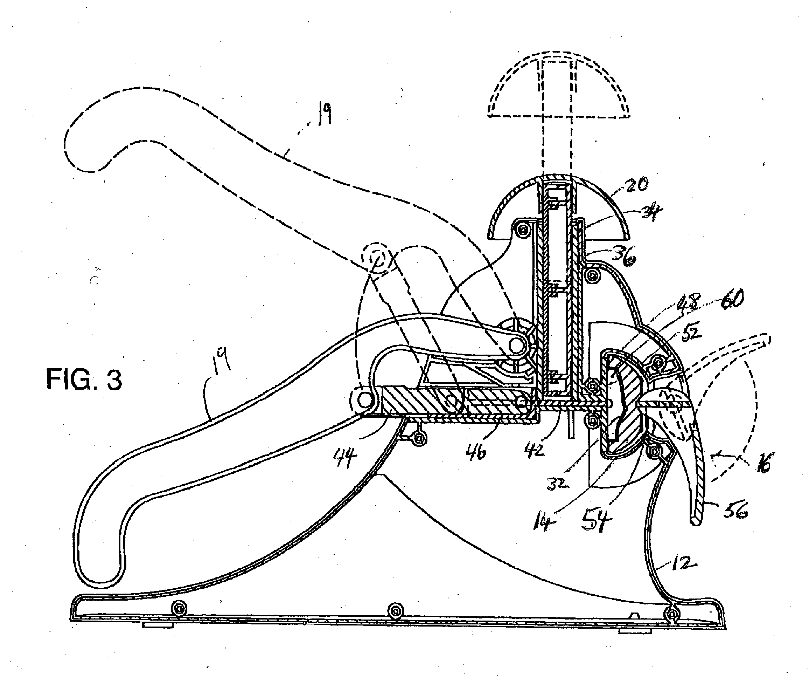

As illustrated in Fig. 3, mold 14 may be locked into mold chamber 18 by lock mechanism 16. Lock mechanism 16 includes a cam structure 54 near a pivoting end and a lock handle 56 at another end. When lock handle 56 is in a fully upward position, as illustrated with dashed lines in Fig. 3, cam structure 54 is configured not to engage mold 14. When lock handle 56 is in a fully downward position, as illustrated with solid lines in Fig. 3, cam structure 54 is configured to engage mold 14 and lock it into place. Locking mechanism 16 provides a means of supporting and clamping mold 14 so that the mold cavity will correspond to the outlet of press piston 42. The clamping readily provides for the creation of compression chamber 50 configured to withstand relatively high amounts of pressure on the order of thousands of pounds per square inch.

Press piston 42 is fully extended while press handle 19 is in the fully down position of the handle's stroke. In the fully extended position press piston 42 ends flush with planar surface 52 of the compression chamber wall 48. As a result of this flush alignment of the end of piston 42 with wall 48, the mold when full of material may be removed without interference from press piston 42. Flush alignment of the piston end with the mold wall, additionally ensures no stem is formed on the chocolate candy extending beyond the mold wall, which may prevent easy removal of the mold and the chocolate candy.

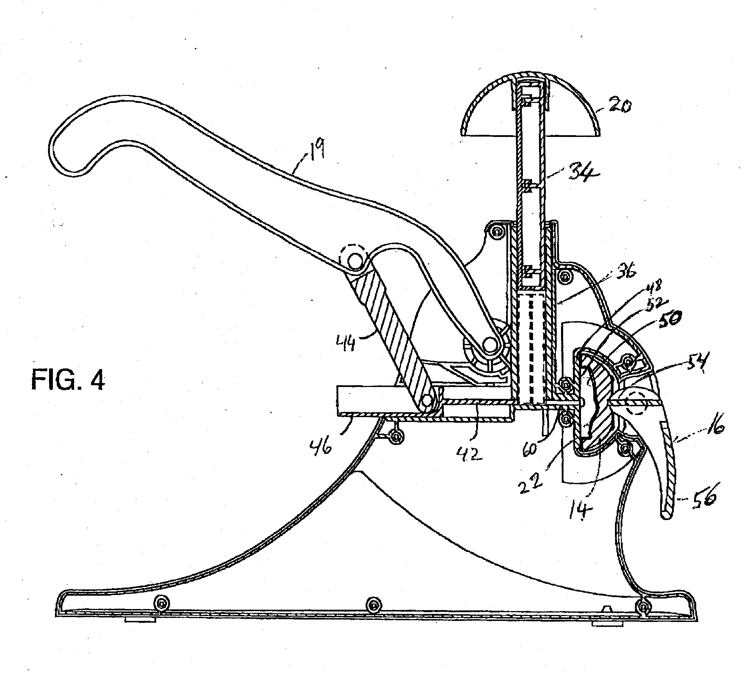

Fig. 4 shows, press handle 19 in a fully upward position causing press piston 42 to be fully retracted leaving the bottom opening of hopper 36 unobstructed so chocolate in hopper 36 may be pressed down by plunger 32. Plunger 32 is illustrated in an upward position indicating that hopper 36 is full.

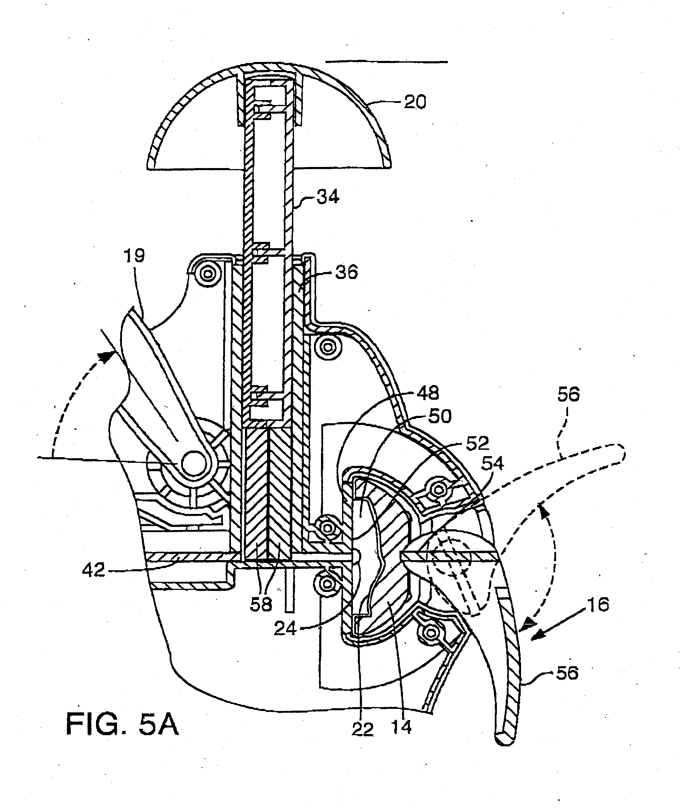

Operation of isostatic press 10 for producing chocolate candies is described with reference to Figs. 5A-5F. Initially a child selects one of molds 14 and inserts that molds corresponding mold liner 28. Holding locking mechanism 16 in an unlocked position, as illustrated by dashed lines in Fig. 5A, the child inserts the selected mold into mold chamber 18. Next, the child locks mold 14 into mold chamber 18 by moving locking mechanism handle 56 to the down and locked position causing locking mechanism cam 54 to engage and secure mold 14 into place at an open end of a channel that piston 42 travels during its extension stroke.

With the mold locked firmly in position a child next removes plunger 32 completely from hopper 36 and inserts chocolate 58. For optimal results, a Hershey® brand chocolate bar may be used. For example, some Hershey® chocolate bars are scored to define twelve rectangular sections, which can be easily broken off. Two of the sections may be placed in the hopper vertically in a back-to-back, or front-to-front configuration, such that the thickness of the chocolate inserted into the hopper is approximately twice the thickness of the original Hershey® chocolate bar. To ensure a proper amount of chocolate 58 is used the hopper should be filled with between one and twenty grams of chocolate, more preferably the hopper should be filled with between five and nine grams of chocolate. By using the above described Hershey® chocolate bar, the method will provide the correct approximate amount of chocolate.

A child may use plunger 32 to push the chocolate 58 out of the bottom of hopper 36 into the path of press piston 42, while holding press handle 19 in a fully upward position so that press piston 42 is fully retracted. It will be understood that the order of loading the chocolate into isostatic press 10 and selecting mold 14 and securing it in place may be reversed without adverse consequences on the play value or functionality of isostatic press 10.

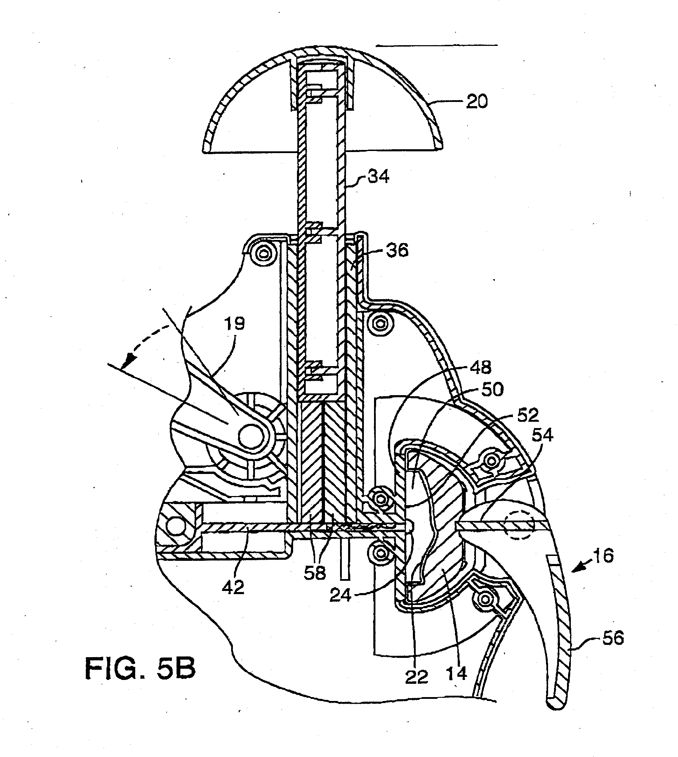

A child then holds one hand on top of plunger knob 20 while pushing press handle 19 downward toward the bottom of its stroke. As press handle 19 travels downward press piston 42 moves horizontally and shears off a slice of chocolate 58 from the bottom of hopper 36 and pushes the slice through an injection channel 60 toward mold 14, as illustrated in Fig. 5B.

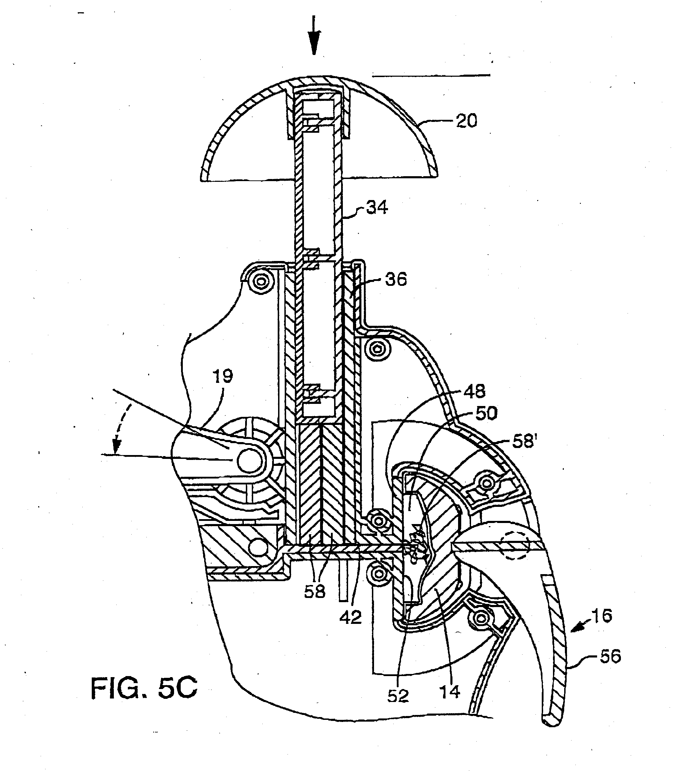

As the child continues to press handle 19 downward press piston 42 pushes chocolate 58 through injection channel 60 and into compression chamber 50. As noted above, compression chamber 50 includes the mold cavity bounded by mold 14 and bounded by chamber wall 48. This first downward stroke of handle 19 causing the first portion of chocolate 58 to be pressed into the compression chamber, as illustrated by Fig. 5C.

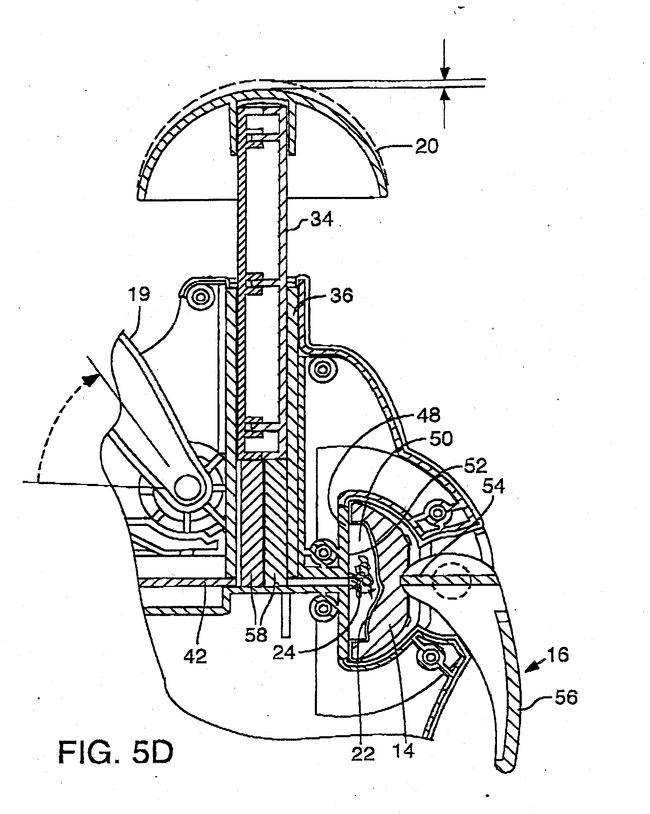

As a child raises press handle 19 back upward to a position fully retracting press piston 42 from below hopper 36, plunger 32 indexes downward in a ratchet-type motion. This ratchet-type motion pushes additional chocolate 58 down out of the bottom of hopper 36 into press piston region 38, as illustrated by Fig. 5D. The chocolate and press are then ready to repeat the process shown in Figs. 5A-5C, pressing additional chocolate into the compression chamber in the same manner as the first portion of chocolate was pressed into compression chamber 50.

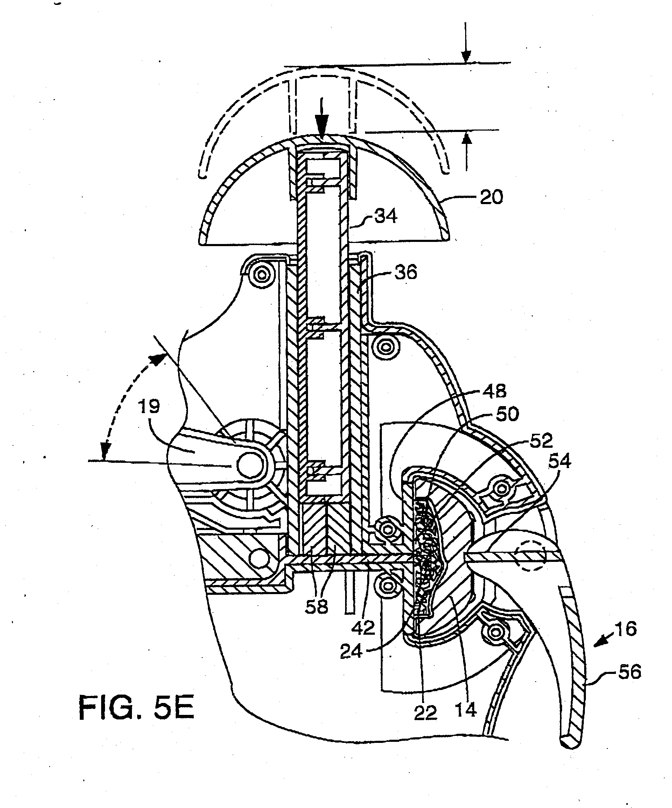

Fig. 5E illustrates the hopper 36 and compression chamber 50 after approximately five to eight complete strokes of press handle 19 and press piston 42, have been completed. Approximately, half of the chocolate from a Hershey® bar, loaded as described above, will be pressed into the compression chamber after about six strokes of press handle 19. Compression chamber 50 begins to fill with a crumbled, coarse-powder consistency chocolate. As pressure increases in compression chamber 50 the powdery chocolate begins to agglomerate and form a flowable mixture.

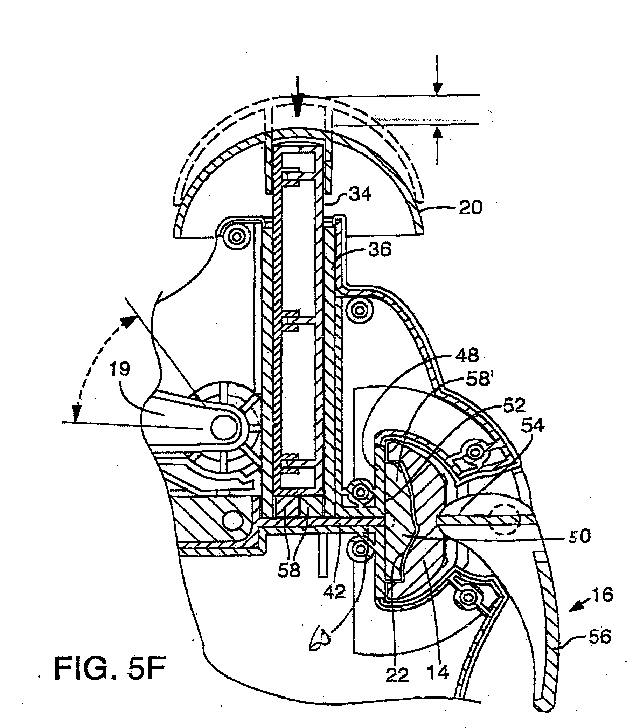

At sufficiently high pressure, generated by additional strokes of the press piston, pressing more chocolate into the compression chamber, the chocolate reconstitutes to achieve a theoretical maximum density and restore the properties of the initial milk chocolate product, as indicated by the solid chocolate 58' shown in compression chamber 50 in Fig. 5F. The number of strokes required to cause this reconstitution pressure will vary depending on the volume of the mold being filled. The range, as noted above is between five and twenty strokes of the press piston. Preferably, it will take between eight and fifteen strokes of the piston to move the required quantity of chocolate and apply the required amount of pressure. Two few strokes of handle 19 diminish the play valve of the press. In the same way, too many strokes and the play value of the press is harmed. It will be understood that the quantity of chocolate pressed into the compression chamber in each stroke is a function of the displacement of the piston. The displacement is a measure to the volume of chocolate moved with each stroke.

Adjustments to isostatic press 10 may be made to change the operation of the press. For example, changing the number of cycles of moving the handle up and down may be achieved by varying the cross-section of the piston and the length of the piston's travel distance from fully retracted to fully extended.

The configuration of press handle 19 and press piston 42 facilitate generating high pressure on the chocolate within the mold cavity. Press handle 19 may typically receive 1 to 50 pounds of downward force from a child. More commonly, a child will be able to produce a downward force of 10-15 lbs. A mechanism may be employed for generating a mechanical advantage to multiply the final force at the press piston to be 100 to 150 pounds of force, or more. Limiting the cross sectional area of press piston 42 to one twentieth of a square inch enables the piston to generate a hydraulic force of 2000 to 3000 PSIG (pounds per square inch gauge).

One wax-like pressure-fusible material is milk chocolate, as noted above. A description of an isostatic pressing process for milk chocolate is described herein as follows. While milk chocolate candy is a solid at room temperature, it has been unexpectedly found that the chocolate can be formed into detailed shapes through a process of cold, isostatic pressing, as has been described herein. That is, if sufficient force is applied to the solid chocolate candy, it will undergo flow by a process of plastic deformation. This flow can be controlled in such a manner that the chocolate will be formed into virtually any desired shape such as may be defined by a mold.

Forces required to process chocolate with an isostatic press like that of the present embodiment vary depending on the exact nature of the chocolate to be formed. For example, a popular milk chocolate candy is produced by the Hershey® Foods Corporation, Hershey, Pennsylvania. This chocolate contains sugar, milk, cocoa-butter, soya lecithin and vanillin and is a waxy solid at room temperature. If this chocolate is first broken up and placed in a cylinder and then compressed with a piston, it will initially crumble into relatively smaller pieces. As force on the piston is increased, the chocolate crumbs become still smaller and the product resembles a coarse powder. Because the structure of the matrix of the chocolate has been disturbed, the once homogeneous dark brown chocolate can now be seen as a mixture of dark brown grains, which are interspersed with lighter brown grains.

Further pressure, ranging from less than 100 PSIG to several hundred PSIG causes the product to flow hydraulically. At still higher pressures, the chocolate crumbs begin to agglomerate and flowability is increased. If this forming process takes place in a closed chamber with a mold cavity hydraulically attached, the chocolate will now flow into the mold and begin to take on the shape of the mold. As pressures on the chocolate are increased to between about 1000 PSIG to 2000 PSIG, the chocolate will become completely reconstituted and its density will approach theoretical maximum.

While the exact pressure required to produce a satisfactory chocolate product varies with the chocolate temperature, 1000 PSIG to 2000 PSIG has been found to be satisfactory at room temperature. Because the chocolate contains very little air or entrained gasses at about 1000 PSIG to 2000 PSIG its color will be restored. Pressures required to restore the desirable color and density may be significantly less at higher chocolate temperatures. Additionally, the chocolate structure is restored and the desirable "snap" upon breaking, indicating proper tempering is observed.

Since the chocolate flows exceedingly well at the elevated pressures, even minute details, which may be desirably incorporated into any molds used, are duplicated by the formed chocolate. When the forming pressure is relieved and the part is removed from the mold, the formed part is dense, smooth and every bit as esthetically appealing as chocolates formed using conventional melting and casting processes. Taste and "mouth" or feel of the chocolate also remains essentially unchanged.

While the description of isostatic press 10 has so far been direct primarily to the formation of chocolate candies, it will be readily apparent that this and other embodiments of the press can be used to form objects from pseudo-solids such as wax as might be employed to make shaped candles. Similarly, the isostatic press can be employed to produce variously shaped soap products.

While the invention has been disclosed in its preferred form, the specific embodiments thereof as disclosed and illustrated herein are not to be considered in a limiting sense as numerous variations are possible. Applicants regard the subject matter of their invention to include all novel and non-obvious combinations and subcombinations of the various elements, features, functions and/or properties disclosed herein. No single feature, function, element or property of the disclosed embodiments is essential.

## Claims

1. A method of forming a molded article from a solid raw material wherein the raw material is fed into an injection chamber (60) and the material (58) is expelled from there into a shaped mold (14) to adopt the shape thereof **characterised in that** the raw material is pressure-formable at ambient temperature and is expelled into the mold (14) by application of pressure manually thereto.

2. A method according to claim 1 **characterised in that** the mold (14) is held in a position in communication with the injection chamber (60) to receive the expelled material therefrom with a retention device (16) which is releasable to permit insertion of the mold into and removal from the said position.

3. A method according to claim 2 **characterised in that** the retention device (16) comprises a manually operable catch.

4. A method according to claim 2 or 3 **characterised in that** a plurality of interchangeable molds (14) are provided and one mold (14) is selected therefrom for insertion into the said position.

5. A method according to any one of claims 1 to 4 **characterised in that** the raw material is fed from a hopper (36) into the said injection chamber (60) by manual application of pressure thereto with a plunger (32).

6. A method according to claim 5 **characterised in that** the raw material (58) is fed into the injection chamber (60) transversely to the direction in which the material is expelled into the mold (14).

7. A method according to any one of claims 1 to 6 **characterised in that** the material is expelled into the mold (14) by movement of a piston (42) along the chamber (60), said movement being effected by manual operation of a force-applying mechanism (19) connected to the piston (42).

8. A method according to claim 5 or 6 in combination with claim 7 **characterised in that** the piston (42) is movable between a forward position at which the material is expelled into the mold (14) and a rearward retracted position, the force-applying mechanism (19) being connected to the plunger (36) to cause the raw material to be fed from the hopper (36) to the injection chamber (60) when the piston (42) is moved to the retracted position.

9. A method according to any one of claims 1 to 8 **characterised in that** the material is fed to the injection chamber (60) in solid form and is expelled into the mold (14) at ambient temperature by application of pressure thereto isotactically, whereby the material is made fluent in the injection chamber (60) and solidifies in the mold (14).

10. A method according to claim 9 **characterised in that** the pressure is in the range 1000-2000 PSIG.

11. A method according to any one of claims 1 to 10 **characterised in that** the injection chamber is of smaller volume than the mold and the raw material is expelled in multiple successive charges to fill the mold.

12. A method according to any one of claims 1 to 11 **characterised in that** the raw material is milk chocolate.

13. Apparatus for use in performing the method of claim 1 comprising an injection chamber (60), a shaped mold (14) releasably held by a retention device (16) against an outlet (48) of said chamber (60) to receive expelled material therefrom, a hopper passageway (36) in communication transversely with said chamber (60), a piston (42) movable along said chamber between a forward position adjacent to said mold and a rearward retracted position clear of said hopper passageway (36), a plunger (38) manually movable along said hopper passageway (36) to feed material to the injection chamber (60), and a force-applying mechanism (19) connected to said piston (42) to effect manual movement of said piston to said forward position thereby to apply isostatic pressure at ambient temperature to material within said chamber (60).

14. Apparatus according to claim 13 **characterised in that** the force applying mechanism (19) is connected to said plunger (38) to move this along said passageway (36) when said piston (42) is moved to the retracted position.

15. Apparatus according to claim 13 or 14 **characterised in that** the piston (42) is in the form of a flat blade.

16. Apparatus according to any one of claims 13 to 15 **characterised in that** the mold (14) has a cavity which is of larger volume than the injection chamber (60).
